(19) Europäisches Patentamt

European Patent Office

Office européen des brevets

(11) **EP 0 825 523 B1**

(12) **EUROPÄISCHE PATENTSCHRIFT**

(45) Veröffentlichungstag und Bekanntmachung des Hinweises auf die Patenterteilung:
**02.06.2004   Patentblatt 2004/23**

(51) Int Cl.$^7$: **G06F 7/52**

(21) Anmeldenummer: **97111341.0**

(22) Anmeldetag: **04.07.1997**

(54) **Verfahren und Schaltung zur Multiplikation eines Multiplikanden und eines Multiplikators nach dem Booth-Verfahren in iterativen Schritten**

Method and circuit for multiplying a multiplicand and a multiplier by the Booth-method in iterative steps

Méthode et circuit à multiplier un multiplicand et un multiplieur par la méthode Booth en pas itératives

(84) Benannte Vertragsstaaten:
**DE FR GB IT**

(30) Priorität: **09.08.1996   DE 19632246**

(43) Veröffentlichungstag der Anmeldung:
**25.02.1998   Patentblatt 1998/09**

(73) Patentinhaber: **Infineon Technologies AG**
**81669 München (DE)**

(72) Erfinder: **Kleine, Ulrich, Dr.**
**38350 Helmstedt (DE)**

(74) Vertreter: **Jannig, Peter, Dipl.-Ing. et al**
**Jannig & Repkow,**
**Patentanwälte,**
**Klausenberg 20**
**86199 Augsburg (DE)**

(56) Entgegenhaltungen:
**EP-A- 0 144 568**

- **ICASSP '86 proc., Tokyo, Seiten 2163-2166; et al: 'A fast adder-based...'. XP002047972**

**Beschreibung**

Aus der US-Patentschrift 5,457,804 ist eine Multiplikationschaltung bekannt, bei der die Multiplikationszeit für Multiplikationen mit doppelter Genauigkeit verkürzt wird, wobei wahlweise entweder eine höherwertige Hälfte oder eine niedrigerwertige Hälfte eines Eingangswortes der Multiplikationsschaltung über einen Multiplexer einem üblichen Booth-Dekoder zugeführt wird.

Es existieren zahlreiche Algorithmen zur beschleunigten Berechnung einer Multiplikation. Im klassischen Booth-Algorithmus werden immer zwei Bits des Multiplikators gleichzeitig betrachtet und daraus ein Faktor gebildet, mit dem der Multiplikand multipliziert wird, und dieses Produkt wird jeweils zum Partialprodukt addiert. Diese Methode arbeitet mit n-gleichförmigen Schiebeoperationen um eine Bitposition nach rechts (Division durch 2) und n/2 Additionen, wobei n die Wortbreite des Multiplikators ist. Für Zweier- Komplement-Darstellungen werden keine Vorzeichenkorrekturen benötigt.

Eine schnellere modifizierte Methode ist in [1], [2] vorgeschlagen worden. Bei dieser Methode werden gleichzeitig drei Bit des Multiplikators betrachtet, die in 5 verschiedene Faktoren decodiert werden (0; +-1; +-2; siehe Tabelle 1). Für diesen Algorithmus werden nur noch n/2 Schiebeoperationen um zwei Bitpositionen nach rechts (Division durch 4) und n/2 Additionen benötigt. Bei beiden erwähnten Methoden kann die Decodierung entweder beim LSB (Least Significant Bit) oder beim MSB (Most Significant Bit) begonnen werden, eine spezielle Vorzeichenbehandlung ist nicht nötig. Die Decodierung beginnend mit dem LSB hat den Vorteil [3], daß durch Anwendung des Hornerschemas die Wortbreite des Produkts auf die Wortbreite des Multiplikanden beschränkt wird. Das so erhaltene Ergebnis stimmt mit den ersten m-Bit des exakten n+n Bit breiten Produkts überein. Im folgenden wird der modifizierte Booth-Algorithmus etwas genauer beschrieben, da er als Ausgangspunkt für die Erfindung dient.

Der Multiplikator Y und der Multiplikand X seien durch ihre Zweier-Komplement-Darstellung gegeben.

$$Y = -y_0 + \sum_{i=1}^{n-1} y_i 2^{-i} \qquad (1)$$

$$X = -x_0 + \sum_{j=1}^{m-1} x_j 2^{-j} \qquad (2)$$

mit $y_i \in \{0,1\}$, für i= 0, 1, 2,...,n-1 und $x_j \in \{0,1\}$,
für j= 0, 1, 2 , ..., m-1

Durch Zusammenfassung zweier aufeinanderfolgender Summationsschritte kann der Multiplikator Y in

$$Y = \sum_{i=1}^{n-1} (y_{i+1} + y_i - 2y_{i-1}) 2^{-i}, \qquad (3)$$

für i= 1, 3, 5, ..., n-1 und $y_n = 0$
umgeformt werden.

Das Produkt der Multiplikation P erbibt sich somit mit dem Multiplikanten X zu

$$P = XY = \sum_{i=1}^{n-1} \left\{ X(y_{i+1} + y_i - 2y_{i-1}) 2^{-i} \right\} \qquad (4)$$

für i=1, 3, 5, ..., n-1, mit $y_n = 0$

EP 0 825 523 B1

und mit

$$z_i = y_{i+1} + y_i - 2y_{i-1} \qquad (5)$$

$$P = \sum_{i=1}^{n-1} X z_i \, 2^{-i} \qquad (6)$$

für i=1, 3, 5, ..., n-1

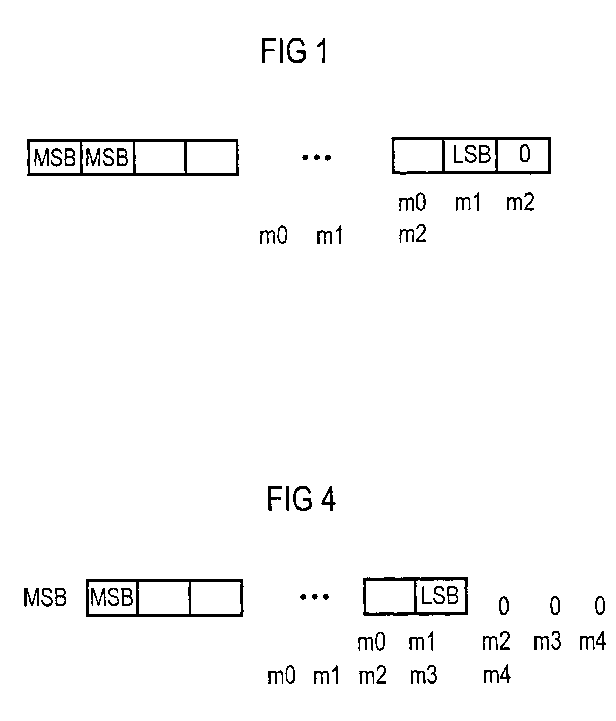

In Fig. 1 ist die prinzipielle Abarbeitung des Multiplikators X mit dem modifizierten Booth-Decoder dargestellt. Beginnend an der LSB-Seite werden immer drei Bits gleichzeitig decodiert und anschließend das Decodierungsfenster um zwei Bitpositionen nach links verschoben. Das Bit $y_n$ wird auf 0 gesetzt, und falls die Wortbreite n ungerade ist, wird ein Zusatzbit durch die Aufdopplung des Multiplikators MSB's erzeugt. Die entsprechende Decodiertabelle kann Tabelle 1 entnommen werden. Diese muß nicht weiter erläutert werden, da sie sich aus [3] ergibt.

| Multiplikatorbits (Y) | | | |
|---|---|---|---|
| $Y_{i-1}$ | $Y_i$ | $Y_{i+1}$ | Operation |
| 0 | 0 | 0 | $PP_i \leftarrow 0.25PP_{i+2}$ |
| 0 | 0 | 1 | $PP_i \leftarrow 0.25PP_{i+2} + X$ |
| 0 | 1 | 0 | $PP_i \leftarrow 0.25PP_{i+2} + X$ |
| 0 | 1 | 1 | $PP_i \leftarrow 0.25PP_{i+2} + 2X$ |
| 1 | 0 | 0 | $PP_i \leftarrow 0.25PP_{i+2} - 2X$ |
| 1 | 0 | 1 | $PP_i \leftarrow 0.25PP_{i+2} - X$ |
| 1 | 1 | 0 | $PP_i \leftarrow 0.25PP_{i+2} - X$ |
| 1 | 1 | 1 | $PP_i \leftarrow 0.25PP_{i+2}$ |

Tabelle 1

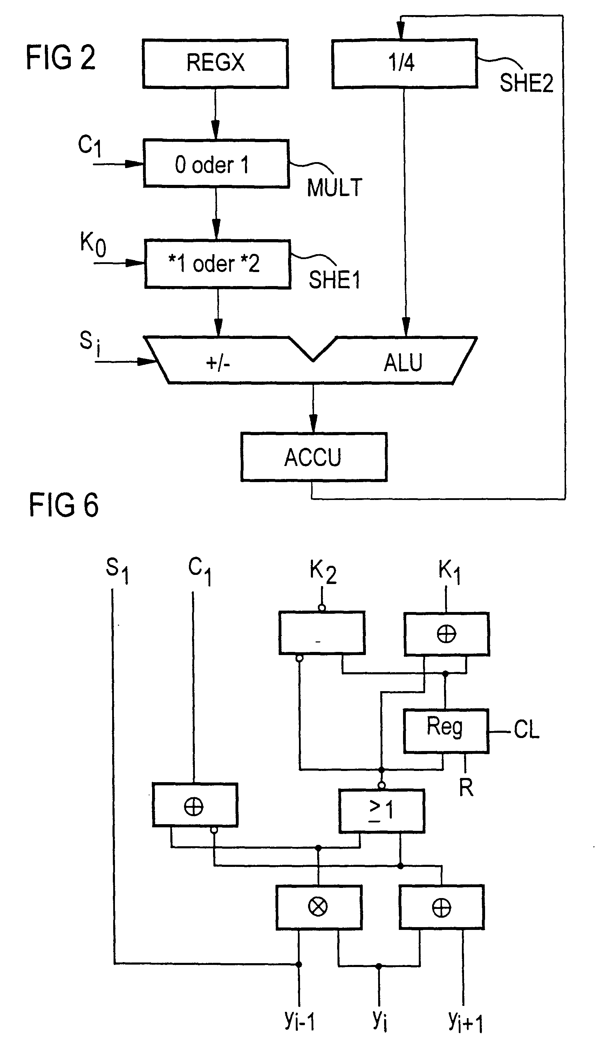

Entsprechend den Codiervorschriften der Tabelle 1 werden Steuersignale erzeugt, nämlich das Faktorsignal C, das Schiebesignal $K_0$ und das Vorzeichensignal $S_i$. Die Steuersignale steuern den konkreten Ablauf der einzelnen Zyklen der Multiplikation. Fig. 2 zeigt ein Blockschaltbild einer üblichen Booth-Multiplizierer-Architektur. Zu Beginn einer Multiplikation wird zuerst der Multiplikand X in das Register REGX geladen und das Akkumulationsregister ACCU auf 0 gesetzt und initialisiert. Entsprechend dem Wert des Multipliktors Y und dem entsprechenden Ergebnis der Booth-Decodierung nach Tabelle 1 werden die einzelnen Partialprodukte in n/2 Schritten gem. Gleichung 6 erzeugt. Dazu muß der Multiplikand X in jeder Iteration mit 0, 1 oder 2 multipliziert werden. Dazu dient in Fig. 2 die Schiebeeinheit SHE1. Die Multiplikation mit dem Faktor 2 bedeutet, daß eine links-Schiebeoperation des Multiplikanden um eine Bitposition durchgeführt werden muß. Das Partialprodukt PP wird in jeder Iteration mit Hilfe einer Schiebeeinheit SHE2, die das Partialprodukt der vorhergehenden Iteration durch 4 dividiert (Rechtsverschiebung um zwei Bitpositionen), berechnet. Nach n/2 Iterationen steht das Produkt im Akkumulationsregister ACCU zur Verfügung. Es ist zu beachten, daß der Multiplikand X ein aufgedoppeltes MSB besitzen muß, damit kein Überlauf während der Ausführung der Additionen bzw. Subtraktionen auftreten kann. Mit Hilfe des Multiplizierers nach Fig. 2 werden somit die in Tabelle 1 unter der Überschrift 'Operation' angegebenen Gleichungen realisiert. Das Faktorsignal C wird dazu verwendet, um den Multiplikanden X zur Schiebeeinheit SHE1 durchzulassen oder 0 zu setzen. Eine solche Operation ist gemäß der ersten und der letzten Zeile der Tabelle 1 erforderlich. Eine Multiplikation mit 2 ist für den Multiplikanden X nach Tabelle

3

1 in der 4. und 5. Zeile erforderlich. Die Addition bzw. Subtraktion erfolgt in einer arithmetisch logischen Einheit ALU in Abhängigkeit des Vorzeichensignals $S_i$. Aus der letzten Spalte der Tabelle 1 ist entnehmbar, wann der Multiplikand X zu dem vorhergehenden Partialprodukt $PP_{i+2}$ addiert oder subtrahiert werden muß. Das Partialprodukt $PP_{i+2}$ steht im Akkumulationsregister ACCU und wird in der Schiebeeinheit SHE2 mit 0,25 multipliziert und dann zur Bildung des nächsten Partialproduktes $PP_i$ der ALU wieder zugeführt. Die Zuordnung der Multiplikator-Bits $y_{i-1}$, $y_i$, $y_{i+1}$ zu den einzelnen Operationen kann der Tabelle 1 entnommen werden.

EP 144 568 beschreibt der nächstliegender Stand der Technik. Ziel der Erfindung ist es, den oben erläuterten Booth-Algorithmus zu modifizieren, um eine Vereinfachung des Multiplizierers zu erreichen. Dieses Ziel wird gemäß den Merkmalen des Patentanspruches 1 gelöst.

Eine weitere Aufgabe besteht darin, einen Booth-Multiplizierer anzugeben, der nach dem geänderten Booth-Algorithmus arbeitet.

Schließlich besteht die Aufgabe darin, einen Decodierungsschaltkreis anzugeben, mit dem die Steuersignale für den Multiplizierer erzeugt werden.

Weiterbildungen der Erfindung ergeben sich aus den abhängigen Ansprüchen.

Es zeigen

Fig. 1    das Decodierungsfenster des Multiplikators nach den bekannten Verfahren,
Fig. 2    den bekannten Booth-Multiplizierer,
Fig. 3    ein Blockschaltbild des modifizierten Booth-Multiplizierers,
Fig. 4    das Decodierungsfenster des Multiplikators nach dem geänderten Booth-Algorithmus,
Fig. 5    ein Blockschaltbild der Booth-Decodierungsschaltung,
Fig. 6    eine Realisierung des Booth-Decoders.

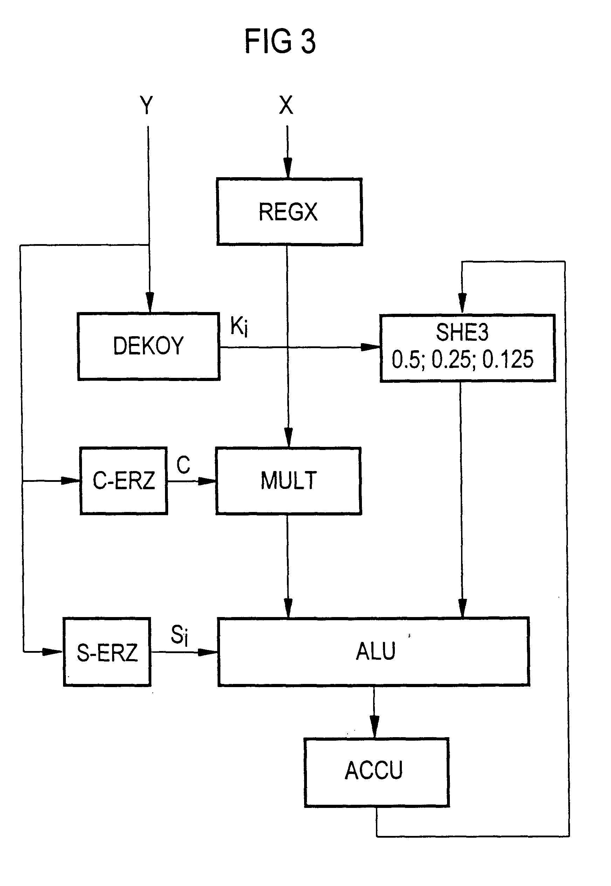

Das Blockschaltbild nach Fig. 3 zeigt im Vergleich zum Blockschaltbild der Fig. 2, daß im linken Zweig der ALU keine Schiebeeinheit SHE mehr vorhanden ist. In diesem linken Zweig wird nur noch eine Multiplikation mit 0 oder 1 und eine Vorzeichenumkehr durchgeführt. Dafür wird aber in der Akkumulatorschleife (rechter ALU-Zweig) eine variable Rechtsschiebeoperation ausgeführt. Der restliche Aufbau des Multiplizierers nach Fig. 3 entspricht dem des Multiplizierers nach Fig. 2.

Im Register REGX wird der Multiplikand X gespeichert. Dieser wird über die Einheit MULT, die von dem Faktorsignal C angesteuert wird, entweder durchgelassen oder auf 0 gesetzt. Dazu. wird entsprechend den Operationen der Tabelle 1 aus dem Multiplikatorsignal Y in einem Schaltkreis C-ERZ das Faktorsignal C erzeugt. Aus dem Multiplikator Y wird ebenfalls das

| Multiplkatorbits Y | | | | | | | | | | |
|---|---|---|---|---|---|---|---|---|---|---|
| $Y_{i-1}$ | $Y_i$ | $Y_{i+1}$ | $Y_{i+2}$ | $Y_{i+3}$ | $s_i$ | $c_i$ | $H_1$ | $H_2$ | $K_2$ | $K_1$ |
| 0 | 0 | 0 | 0 | 0 | 0 | 0 | 1 | 1 | 0 | 1 |
| 0 | 0 | 0 | 0 | 1 | 0 | 0 | 1 | 1 | 0 | 1 |
| 0 | 0 | 0 | 1 | 0 | 0 | 0 | 1 | 1 | 0 | 1 |
| 0 | 0 | 0 | 1 | 1 | 0 | 0 | 1 | 0 | 1 | 0 |
| 0 | 0 | 1 | 0 | 0 | 0 | 1 | 1 | 0 | 1 | 0 |
| 0 | 0 | 1 | 0 | 1 | 0 | 1 | 1 | 1 | 0 | 1 |
| 0 | 0 | 1 | 1 | 0 | 0 | 1 | 1 | 1 | 0 | 1 |
| 0 | 0 | 1 | 1 | 1 | 0 | 1 | 1 | 1 | 0 | 1 |
| 0 | 1 | 0 | 0 | 0 | 0 | 1 | 1 | 1 | 0 | 1 |
| 0 | 1 | 0 | 0 | 1 | 0 | 1 | 1 | 1 | 0 | 1 |
| 0 | 1 | 0 | 1 | 0 | 0 | 1 | 1 | 1 | 0 | 1 |
| 0 | 1 | 0 | 1 | 1 | 0 | 1 | 1 | 0 | 1 | 0 |
| 0 | 1 | 1 | 0 | 0 | 0 | 1 | 0 | 0 | 0 | 1 |
| 0 | 1 | 1 | 0 | 1 | 0 | 1 | 0 | 1 | 1 | 1 |
| 0 | 1 | 1 | 1 | 0 | 0 | 1 | 0 | 1 | 1 | 1 |
| 0 | 1 | 1 | 1 | 1 | 0 | 1 | 0 | 1 | 1 | 1 |
| 1 | 0 | 0 | 0 | 0 | 1 | 1 | 0 | 1 | 1 | 1 |
| 1 | 0 | 0 | 0 | 1 | 1 | 1 | 0 | 1 | 1 | 1 |
| 1 | 0 | 0 | 1 | 0 | 1 | 1 | 0 | 1 | 1 | 1 |
| 1 | 0 | 0 | 1 | 1 | 1 | 1 | 0 | 0 | 0 | 1 |
| 1 | 0 | 1 | 0 | 0 | 1 | 1 | 1 | 0 | 1 | 0 |
| 1 | 0 | 1 | 0 | 1 | 1 | 1 | 1 | 1 | 0 | 1 |
| 1 | 0 | 1 | 1 | 0 | 1 | 1 | 1 | 1 | 0 | 1 |
| 1 | 0 | 1 | 1 | 1 | 1 | 1 | 1 | 1 | 0 | 1 |

| 1 | 1 | 0 | 0 | 0 | 1 | 1 | 1 | 1 | 0 | 1 |
|---|---|---|---|---|---|---|---|---|---|---|
| 1 | 1 | 0 | 0 | 1 | 1 | 1 | 1 | 1 | 0 | 1 |
| 1 | 1 | 0 | 1 | 0 | 1 | 1 | 1 | 1 | 0 | 1 |
| 1 | 1 | 0 | 1 | 1 | 1 | 1 | 1 | 0 | 1 | 0 |
| 1 | 1 | 1 | 0 | 0 | 1 | 0 | 1 | 0 | 1 | 0 |
| 1 | 1 | 1 | 0 | 1 | 1 | 0 | 1 | 1 | 0 | 1 |
| 1 | 1 | 1 | 1 | 0 | 1 | 0 | 1 | 1 | 0 | 1 |
| 1 | 1 | 1 | 1 | 1 | 1 | 0 | 1 | 1 | 0 | 1 |

Tabelle 2

Vorzeichensignal $S_i$ generiert und zwar in dem Schaltkreis S-ERZ. Die Verschiebung des Partialproduktes wird in der Schiebeeinheit SHE3 durchgeführt, wobei entsprechend den auszuführenden Operationen eine Multiplikation mit 1/2, 1/4 oder 1/8 durch Rechtsverschiebung durchgeführt wird.

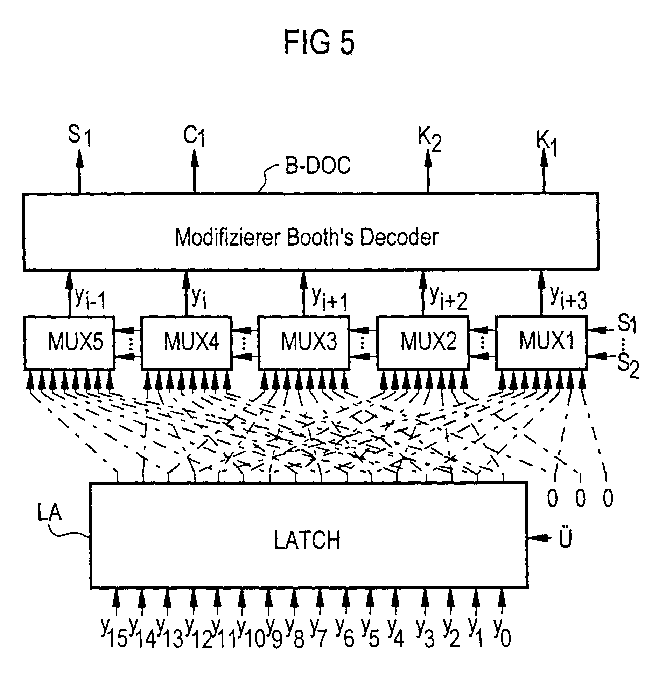

In Tabelle 2 ist eine mögliche Codierung des Multiplikators Y angegeben. Wie aus Tabelle 2 zu ersehen ist, ist eine Erweiterung der Decodierungsgröße auf 5 Bit notwendig, wie dies auch in [3] beschrieben ist. Das Vorzeichensignal Si gibt an, ob der Multiplikand X addiert ($S_i$=0) oder subtrahiert ($S_i$=1) wird, das Faktorsignal C gibt den Faktor an, mit dem der Multiplikand X gewichtet wird (C=1 Multiplikation mit 1, C=0 Multiplikation mit 0), und die Steuersignale $K_1$ (Rechtsschiebeoperation um eine Bitposition falls $K_1$=1) und $K_2$ (Rechtsschiebeoperation um zwei Bitpositionen falls $K_2$=1) definieren den Schiebevektor für die Schiebeeinheit SHE3. Der Wert der Steuersignale $K_1$ und $K_2$ und die dementsprechend durchzuführende Multiplikation der Schiebeeinheit SHE3 kann auch der Tabelle 3 entnommen werden. Wie auch im vorherigen Algorithmus stellt das Bit $y_i$ die aktuelle Stelle dar. Die Bits $y_n$, $y_{n+1}$ und $y_{n+2}$ werden zunächst auf 0 gesetzt (siehe Fig. 4) und falls die Wortbreite n ungerade ist, wird ein Zusatzbit durch Aufdopplung des Multiplikators MSB's erzeugt.

| $H_1$ | $H_2$ | $K_2$ | $K_1$ | Multiplikation |
|---|---|---|---|---|
| 0 | 1 | 1 | 1 | PP*0.125 |
| 1 | 0 | 0 | 1 | PP*0.5 |
| 0 | 0 | 1 | 0 | PP*0.25 |
| 1 | 1 | 1 | 0 | PP*0.25 |

Tabelle 3

Die Multiplikation läuft ähnlich wie bei dem modifizierten Booth-Algorithmus mit konstantem Schiebevektor (Fig. 2) ab. Zunächst wird der Multiplikand in das Register REGX geladen und das Akkumulationsregister ACCU initialisiert. Beginnend an der LSB-Seite wird das 5 Bit breite Decodierungsfenster über die zwei niederwertigsten Bits des Multiplikators Y gelegt (siehe Fig. 4) und nach jeder Iteration um 2 Bitpositionen nach links verschoben. Das Ergebnis der Decodierung bestimmt die konkrete Ausführung der Operationen während einer Iteration. Das Partialprodukt $PP_i$ wird mit Hilfe der variablen Schiebeeinheit SHE3, die Rechtsverschiebungen um 1, 2 oder 3 Bitpositionen erlaubt, berechnet. Nach n/2 Iterationen steht das Produkt in dem Akkumulationsregister ACCU zur Verfügung. Damit während der Ausführung der Additionen bzw. Subtraktionen kein Überlauf auftreten kann, muß der Multiplikand X ein aufgedoppeltes MSB besitzen.

Die Prüfung der Korrektheit der Tabelle 2 kann mit Hilfe der Tabelle 1 durchgeführt werden. Mit der logischen

Verknüpfung $H_1$

$$H_1 = (y_{i-1} \oplus y_i) \times (y_i \otimes y_{i+1}) \tag{7}$$

wird detektiert, ob in der ursprünglichen Codierung nach Tabelle 1 eine Multiplikation mit 2 durchgeführt werden muß, und mit der entsprechenden logischen Verknüpfung $H_2$

$$H_2 = (y_{i+1} \oplus y_{i+2}) \times (y_{i+2} \otimes y_{i+3}) \tag{8}$$

wird detektiert, ob im vorangegangenen Zyklus eine Multiplikation mit 2 durchgeführt worden ist. Mit dem Multiplizierer nach Fig. 3 wird eine Multiplikation mit 2 durch eine zusätzliche Rechtsschiebeoperation des Partialprodukts um eine Bitposition realisiert. Das Partialprodukt muß dann in der nächsten Iteration nicht mehr um 2, sondern um nur eine Bitposition nach rechts verschoben werden. Die beschriebenen Operationen können mit den logischen Funktionen $H_1$ und $H_2$ detektiert werden. Daraus können die Steuersignale $K_1$ und $K_2$ für die Schiebeeinheit SH3 wie folgt bestimmt werden:

$$K_1 = H_1 \oplus H_2 \tag{9}$$

$$K_2 = ( \overline{\overline{H_1}} \ \overline{\times H_2}) \tag{10}$$

Da das Vorzeichen des Multiplikanden Y aufgedoppelt ist ($y_0=y_1$), ist die Bedingung $H_1$ in der letzten Iteration nie erfüllt, und es ist kein zusätzlicher Zyklus für eine weitere Schiebeoperation notwendig, so daß auch für den modifizierten Booth-Algorithmus mit variablen Schiebevektoren n/2 Schiebeoperationen und n/2 Additionen bzw. Subtraktionen notwendig sind.

Die Steuersignale $S_i$ und C lassen sich wie folgt erzeugen:

$$S_i = y_{i-1} \tag{11}$$

$$C_i = (y_{i-1} \otimes y_i) \times (y_i \otimes y_{i+1}) \tag{12}$$

In Tabelle 2 sind die 5 Bit des Multiplikators Y, die vom Decodierungsfenster erfaßt werden, dargestellt, zudem das Faktorsignal C und das Vorzeichensignal S, sowie die Ergebnisse der Verknüpfungen $H_1$ und $H_2$ bzw. $K_1$ und $K_2$. Die Steuersignale $K_1$ und $K_2$ sind umrahmt dargestellt, wenn das Steuersignal $K_2$ binär 1 ist. Tabelle 3 zieht die unterschiedlichen Fälle der Tabelle 2 heraus und gibt an, welche Multiplikation in der Schiebeeinheit SHE3 durchzuführen ist. Wenn sowohl das Steuersignal $K_1$ als auch $K_2$ binär 1 ist, dann erfolgt eine Multiplikation mit 1/8 durch drei Schiebeoperationen nach rechts.

Wenn das Steuersignal $K_1$ binär 1 ist und das Steuersignal $K_2$ binär 0, dann erfolgt nur eine Schiebeoperation oder eine Multiplikation mit 1/2. Ist das Steuersignal $K_1$ binär 0 und das Steuersignal $K_2$ binär 1, dann erfolgen zwei Schiebeoperationen oder eine Multiplikation mit 1/4.

Fig. 5 zeigt das Blockschaltbild der Booth-Decodierungsschaltung DEKOY mit variablem Schiebevektor. Der Multiplikator Y wird mit Hilfe des Übernahmesignales Ü in einem n-Bit breiten Latch-Speicher LA gespeichert. Die Decodierungsfensterfunktion wird mit Hilfe von 5 Multiplexern MUX1 bis MUX5 mit jeweils 8 Eingängen gebildet. Die Eingänge werden durch die Steuerleitungen S1 bis S8 nacheinander ausgewählt. Aus den 5 Bits des aktuellen Decodierungsfensters werden mit Hilfe des eigentlichen Booth-Decoders B-DOC die Steuersignale $S_i$, C, $K_1$ und $K_2$ entsprechend den Gleichungen 7 bis 12 erzeugt.

In Fig. 6 ist das Blockschaltbild des Booth-Decoders B-DOC dargestellt. Da die logischen Funktionen $H_1$ und $H_2$ identisch sind, können sie, wie in Fig. 6 dargestellt, durch Speicherung der Ergebnisse aus dem vorhergehenden Zyklus zu einer Funktion zusammengefaßt werden. Das Ergebnis der Funktion $H_1$ wird mit dem Übernahmesignal CL in das Register REG gespeichert und entspricht in der nächsten Taktperiode dem Ergebnis der Funktion $H_2$. Zu Beginn der Booth-Decodierung ist der Registerinhalt auf logisch 0 zu setzen. Da die Funktion $H_2$ die einzige war, die die Signale $y_{i+2}$ und $y_{i+3}$ benötigte, kann auf die Multiplexer MUX1 und MUX2 in Fig. 5 verzichtet werden.

Die einzelnen Schaltkreise der Fig. 6 werden durch die Symbole erläutert, die denen der Gleichungen 7 bis 12 entsprechen. Entsprechende Schaltkreise sind in der Literatur bekannt.

Literaturverzeichnis:

[1] O. L. MacSorley, High-Speed arithmetic in binary computers, Proc. IRE, Band 49, S. 67-91, 1961

[2] L. P. Rubinfield, A Proof of the Modified Booth's Algorithm for Multiplication, IEEE Trans. Computers, S. 1014-1015, Oktober 1975

[3] A. Stölzle, A. Rainer und W. Ulbrich, Parallel-Serial Multiplication Using Booth's Algorithm and Horner Scheme, Proc. ISCAS'85, S. 1389-1390, Mai 1985

**Patentansprüche**

1.  Verfahren für eine Multiplikationsschaltung zur Multiplikation eines Multiplikanden (X) und eines Multiplikators (Y) nach dem Booth-Verfahren in iterativen Schritten,

    - bei dem beginnend mit dem LSB jeweils drei Multiplikatorbits ($y_{i-1}$, $y_i$, $y_{i+1}$; i=1, 2...) decodiert werden und iterativ in Abhängigkeit des Decodierungsergebnisses ein Partialprodukt ($PP_i$) aus dem vorhergehenden Partialprodukt ($PP_{i+2}$) und dem Multiplikanden gebildet wird, wobei das Partialprodukt ($PP_{i+2}$) zu Beginn auf 0 gesetzt wird,
    - bei dem anschließend in der jeweils nächsten Iteration das Decodierungsfenster über den Multiplikator (Y) um zwei Bit nach links verschoben wird,
    - bei dem zur Gewinnung eines ersten Zwischenergebnisses in Abhängigkeit eines aus den zu decodierenden Bits gewonnenen Faktorsignales (C) der Multiplikand mit 0 oder 1 multipliziert wird,
    - bei dem das erste Zwischenergebnis und ein aus dem Partialprodukt ($PP_{i+2}$) der vorhergehenden Iteration gewonnenes zweites Zwischenergebnis in Abhängigkeit eines aus den zu decodierenden Bits gewonnenen Vorzeichensignals (S) summiert oder subtrahiert werden, **dadurch gekennzeichnet dass**:
    - bei dem, zur Gewinnung des zweiten Zwischenergebnisses, in Abhängigkeit von zwei aus dem Ergebnis (H1) einer Bestimmten Formel der zu decodierenden Bits der laufenden Iteration und aus dem Ergebnis (H2) der bestimmten Formel der vorhergehenden Iteration des Multiplikators erzeugten Steuersignale ($K_1$, $K_2$), das Partialprodukt ($PP_{i+2}$) der vorhergehenden Iteration mit 1/2, 1/4, oder 1/8 multipliziert wird, wobei dem Ergebnis ($H_2$) der bestimmten Formel der vorhergehenden Iteration zu beginn auf $\varnothing$ gesetzt wird; und wobei
        eine Multiplikation mit 1/4 erfolgt, wenn das Decodierungsergebnis der laufenden Iteration ergibt, daß der Multiplikand (X) in einfacher Form mit dem vorhergehenden Partialprodukt ($PP_{i+2}$) verknüpft wird;
        eine Multiplikation mit 1/8 erfolgt, wenn das Decodierungsergebnis der laufenden Iteration ergibt, daß der Multiplikand in 2-facher Form mit dem vorhergehenden Partialprodukt verknüpft wird; und
        eine Multiplikation mit 1/2 erfolgt, wenn das Decodierungsergebnis der vorhergehenden Iteration ergibt, daß der Multiplikand in 2-facher Form zu verknüpfen war.

2.  Verfahren nach Anspruch 1,
    bei dem das Vorzeichensignal (S) nach der Formel

$$S_i = y_{i-1} \qquad\qquad (11)$$

    gewonnen wird.

3.  Verfahren nach Anspruch 1 oder 2,
    bei dem das Faktorsignal (C) nach der Formel

$$C_i = (y_{i-1} \otimes y_i) \times (y_i \otimes y_{i+1}) \qquad\qquad (12)$$

gewonnen wird.

**4.** Verfahren nach einem der vorhergehenden Ansprüche,
bei dem die Steuersignale ($K_1$, $K_2$) aus den folgenden Formeln gewonnen wird:

$$H_1 = (y_{i-1} \oplus y_i) \times (y_i \otimes y_{i+1}) \tag{7}$$

$$H_2 = (y_{i+1} \oplus y_{i+2}) \times (y_{i+2} \otimes y_{i+3}) \tag{8}$$

$$K_1 = H_1 \oplus H_2 \tag{9}$$

$$K_2 = (\overline{\overline{H_1} \times H_2}) \tag{10}$$

**5.** Multiplikatorschaltung zur Durchführung des Verfahrens zur Multiplikation nach dem Booth-Verfahren in iterativen schritten, nach einem der vorhergehenden Ansprüche,
bei dem ein Multiplikandenregister (REGX) vorgesehen ist, das den Multiplikanden (X) speichert,
bei dem am Ausgang des Multiplikandenregisters ein Multiplizierer (MULT) vorgesehen ist, der in Abhängigkeit des Faktorsignales (C) den Multiplikanden mit 0 oder 1 multipliziert,
bei dem eine arithmetisch logische Einheit (ALU) vorgesehen ist, die in Abhängigkeit des Vorzeichensignales (S) das am Ausgang des Multiplizierers (MULT) abgegebene Ergebnis zum am anderen Eingang anliegenden zweiten Zwischenergebnis addiert oder subtrahiert,
bei dem am Ausgang der ALU ein Akkumulationsregister angeordnet ist, **dadurch gekennzeichnet dass**:

bei dem am Ausgang des Akkumulationsregisters eine Schiebeeinheit (SHE3) vorgesehen ist, mit der zur Erzeugung des
zweiten Zwischenergebnisses der Inhalt des Akkumulationsregisters mit 1/2, 1/4 oder 1/8 in Abhängigkeit der Steuersignale (K) multipliziert wird,
bei dem der Ausgang der Schiebeeinheit (SHE3) mit der ALU verbunden ist,
bei dem zur Erzeugung der Steuersignale (K) des Faktorsignals (C) und des Vorzeichensignals (S) eine Decodierungsschaltung vorgesehen ist zur Decodierung von, beginnend mit dem LSB, jeweils drei Multiplikaturbits,
mit einem register (REG) zur Speicherung des Ergebnises einer bestimmten Formel der zu decodierenden Bits,
mit einem Decoder (D-DOC), der aus den Bits des Decodierungsfensters und aus dem im register (REG) gespeicherten ergebnis der vorherge henden Iteration die Steuersignale (K, S, C) erzeugt.

**6.** Multiplikatorschaltung nach Anspruch 5,
mit einem Latch-Speicher (LA) zur Speicherung des Multiplikators (Y), und
mit am Ausgang des Latch-Speichers angeschlossenen Multiplexern (MUX), die am Ausgang aus den Multiplikatorbits die Bits des Decodierungsfensters aufwählen.

**Claims**

**1.** Method for a multiplication circuit for multiplying a multiplicand (X) and a multiplier (Y) using Booth's method in iterative steps,

- in which, starting with the LSB, in each case three multiplier bits ($y_{i-1}$, $y_i$, $y_{i+1}$; i=1, 2...) are decoded and, iteratively as a function of the decoding result, a partial product ($PP_i$) is formed from the preceding partial product ($PP_{i+2}$) and the multiplicand, the partial product ($PP_{i+2}$) being set to 0 at the start,
- in which subsequently the decoding window is left-shifted by two bits via the multiplier (Y) in the respective next iteration,
- in which in order to obtain a first intermediate result, the multiplicand is multiplied by 0 or 1 as a function of a factor signal (C) obtained from the bits to be decoded,

- in which the first intermediate result and a second intermediate result, obtained from the partial product ($PP_{i+2}$) of the preceding iteration are added or subtracted as a function of a sign signal (S) obtained from the bits to be decoded, and
- in which, in order to obtain the second intermediate result, the partial product ($PP_{i+2}$) of the preceding iteration is multiplied by 1/2, 1/4 or 1/8 as a function of two control signals ($K_1$, $K_2$) generated from the bits, to be decoded, of the current iteration and from the bits, to be decoded, of the preceding iteration of the multiplier, in which case

  multiplication by 1/4 is performed when the decoding result of the current iteration is to the effect that the multiplicand (X) is combined in single form with the preceding partial product ($PP_{i+2}$),

  multiplication by 1/8 is performed when the decoding result of the current iteration is to the effect that the multiplicand is combined in 2-form with the preceding partial product, and

  multiplication by 1/2 is performed when the decoding result of the preceding iteration is to the effect that the multiplicand was to be combined in 2-form.

2. Method according to Claim 1, in which the sign signal (S) is obtained using the formula

$$S_i = y_{i-1} \qquad (11)$$

3. Method according to Claim 1 or 2, in which the factor signal (C) is obtained using the formula

$$C_i = (y_{i-1} \otimes y_i) \times (y_i \otimes y_{i+1}) \qquad (12)$$

4. Method according to one of the preceding claims, in which the control signals ($K_1$, $K_2$) are obtained from the following formulae:

$$H_1 = (y_{i-1} \otimes y_i) \times (y_i \otimes y_{i+1}) \qquad (7)$$

$$H_2 = (y_{I+1} \oplus y_{i+2}) \times (y_{i+2} \otimes y_{i+3}) \qquad (8)$$

$$K_1 = H_1 \oplus H_2 \qquad (9)$$

$$K_2 = (\overline{\overline{H_1}} \times \overline{H_2}) \qquad (10)$$

5. Multiplier circuit for carrying out the method according to one of the preceding claims,
   in which a multiplicand register (REGX) which stores the multiplicands (X) is provided,
   in which a multiplier (MULT) which multiplies the multiplicands by 0 or 1 as a function of the factor signal (C) is provided at the output of the multiplicand register,
   in which an arithmetic logic unit (ALU) is provided which adds or subtracts the result output at the output of the multiplier (MULT) to or from the second intermediate result present at the other input, as a function of the sign signal (S),
   in which an accumulation register is arranged at the output of the ALU,
   in which provided at the output of the accumulation register is a shift unit (SHE3) with the aid of which, for the purpose of producing the second intermediate result, the contents of the accumulation register are multiplied by 1/2, 1/4 or 1/8 as a function of the control signals (K), and
   in which the output of the shift unit (SHE3) is connected to the ALU.

6. Multiplier circuit according to Claim 5,
   in which a decoding circuit is provided for generating the control signals (K) of the factor signal (C) and the sign signal (S),

having a latch memory (LA) for storing the multiplier (Y), having multiplexers (MUX) which are connected to the output of the latch memory and select the bits of the decoding window from the multiplier bits at the output, and having a decoder (D-DOC) which generates the control signals (K, S, C) from the bits of the decoding window.

**Revendications**

1. Procédé de commande d'un circuit multiplicatif pour la multiplication d'un multiplicande (X) et d'un multiplicateur (Y) selon la méthode Booth par étapes itératives, **caractérisé en ce que**

   • en commençant en mode LSB, trois bits du multiplicateur ($y_{i-1}$, $y_i$, $y_{i+1}$ ; i= 1, 2...) sont décodés et, par itération en fonction du résultat du décodage, un produit partiel ($pp_i$) est obtenu à partir du produit partiel précédent ($pp_{i+2}$) et du multiplicande, le produit partiel ($pp_{i+2}$) étant égal à 0 au début,

   • ensuite pour chaque itération suivante, la fenêtre de décodage est décalée, par le multiplicateur (Y), de deux bits vers la gauche,

   • en vue de l'obtention d'un premier résultat intermédiaire en fonction d'un signal de facteur (C) acquis à partir des bits à décoder, le multiplicande est multiplié par 0 ou 1,

   • le premier résultat intermédiaire ainsi qu'un second résultat intermédiaire, acquis à partir du produit partiel ($pp_{i+2}$) de l'itération précédente, sont additionnés ou soustraits en fonction d'un signal de signe (S) acquis à partir des bits à décoder,

   • en vue de l'obtention du second résultat intermédiaire en fonction de deux signaux de commande ($K_1$, $K_2$) générés à partir des bits à décoder de l'itération en cours et des bits à décoder de l'itération précédente du multiplicateur, le produit partiel ($pp_{i+2}$) de l'itération précédente est multiplié par 1/2, 1/4 ou 1/8,

      - une multiplication par 1/4 intervenant, si le résultat du décodage de l'itération en cours indique que le multiplicande (X) est lié de façon simple avec le produit partiel ($pp_{i+2}$) précédent,

      - une multiplication par 1/8 intervenant, si le résultat du décodage de l'itération en cours indique que le multiplicande est lié de façon double avec le produit partiel précédent,

      - une multiplication par 1/2 intervenant, si le résultat du décodage de l'itération précédente indique que le multiplicande était à lier de façon double.

2. Procédé selon la revendication 1, **caractérisé en ce que** le signal de signe (S) est obtenu selon la formule

$$S_i = y_{i-1} \qquad\qquad (11)$$

3. Procédé selon la revendication 1 ou 2, **caractérisé en ce que** le facteur de signal (C) est obtenu selon la formule

$$C_i = (y_{i-1} \otimes y_i) x (y_i \otimes y_{i+1}) \qquad\qquad (12)$$

4. Procédé selon l'une des revendications précédentes, **caractérisé en ce que** les signaux de commande ($K_1$, $K_2$) sont obtenus par les formules suivantes :

$$H_1 = (y_{i-1} \oplus y_i) x (y_i \otimes y_{i+1}) \qquad\qquad (7)$$

$$H_2 = (y_{i+1} \oplus y_{i+2}) x (y_{i+2} \otimes y_{i+3}) \qquad\qquad (8)$$

$$K_1 = H_1 \oplus H_2 \tag{9}$$

$$K_2 = (\overline{H_1 \times H_2}) \tag{10}$$

5. Circuit multiplicatif pour la mise en oeuvre du procédé selon l'une des revendications précédentes, **caractérisé en ce qu'**il est prévu

   - un registre pour le multiplicande (REGX), qui mémorise le multiplicande (X),

   - à la sortie du registre pour le multiplicande (REGX), une unité multiplicatrice (MULT), qui multiplie, en fonction du signal de facteur (C), le multiplicande par 0 ou 1,

   - une unité à logique arithmétique (ALU) qui additionne ou soustrait, en fonction du signal de signe (S), le résultat obtenu à la sortie de l'unité multiplicatrice (MULT) avec le second résultat intermédiaire présent à l'autre entrée,

   - un registre d'accumulation disposé à la sortie de l'ALU,

   - une unité de décalage (SHE3) à la sortie du registre d'accumulation, par laquelle pour l'acquisition du second résultat intermédiaire, le contenu du registre d'accumulation est multiplié par 1/2, 1/4 ou 1/8 en fonction des signaux de commande (K),

   - et la sortie de l'unité de décalage (SHE3) est connectée avec l'ALU.

6. Circuit multiplicatif selon la revendication 5, **caractérisé en ce que**

   - en vue de l'acquisition des signaux de commande (K), du signal de facteur (C) et du signal de signe (S), un circuit de décodage est prévu,

   - avec une mémoire à verrouillage (LA) pour mettre en mémoire le multiplicateur (Y),

   - avec des multiplexeurs (MUX) raccordés à la sortie de la mémoire à verrouillage qui sélectionnent en sortie à partir des bits du multiplicateur les bits de la fenêtre de décodage,

   - avec un décodeur (D-DOC) qui génère à partir des bits de la fenêtre de décodage les signaux de commande (K, S, C).

## FIG 1

| MSB | MSB | | |
|-----|-----|---|---|

•••

| | LSB | 0 |
|---|-----|---|

m0   m1   m2

m0   m1   m2

## FIG 4

MSB
| MSB | | |
|-----|---|---|

•••

| | LSB | 0   0   0
|---|-----|

m0   m1   m2  m3  m4

m0 m1 m2 m3  m4

FIG 2

REGX

1/4    SHE2

C₁ → 0 oder 1   MULT

K₀ → *1 oder *2   SHE1

Sᵢ → +/-   ALU

ACCU

FIG 6

S₁   C₁   K₂   K₁

-    ⊕

Reg — CL

R

⊕    ≥1

⊗    ⊕

yᵢ₋₁   yᵢ   yᵢ₊₁

# FIG 3

# FIG 5